# EUROPEAN PATENT SPECIFICATION

(11) **EP 4 474 202 B1**
(45) Date of publication and mention of the grant of the patent: **25.03.2026**
(21) Application number: 22924593.1
(22) Date of filing: 02.02.2022
(51) Int. Cl.: B60L 15/20, B60L 50/60, B60K 6/52, B60W 20/00, B60W 30/02, B60L 3/10, B60W 10/08, B60W 50/00

(54) **TORQUE DISTRIBUTION CONTROL METHOD AND TORQUE DISTRIBUTION CONTROL DEVICE**
DREHMOMENTVERTEILUNGSSTEUERUNGSVERFAHREN UND DREHMOMENTVERTEILUNGSSTEUERUNGSVORRICHTUNG
PROCÉDÉ DE COMMANDE DE DISTRIBUTION DE COUPLE ET DISPOSITIF DE COMMANDE DE DISTRIBUTION DE COUPLE

(43) Date of publication of application: 11.12.2024
(73) Proprietor: NISSAN MOTOR CO., LTD., Kanagawa 221-0023 (JP)
(72) Inventor: ISHIJIMA, Masahiro, Atsugi-shi, Kanagawa 243-0123 (JP); HIROI, Daisuke, Atsugi-shi, Kanagawa 243-0123 (JP); TERAO, Akihiro, Atsugi-shi, Kanagawa 243-0123 (JP); SAITOU, Kouki, Atsugi-shi, Kanagawa 243-0123 (JP)
(74) Representative: Hoefer & Partner Patentanwälte mbB
(86) International application number: PCT/JP2022/004117
(87) International publication number: WO 2023/148860

(56) References cited:
- DE-A1- 102019 219 041
- JP-A- 2006 240 402
- JP-A- 2013 192 446
- JP-A- 2018 093 645
- JP-A- 2020 162 373
- JP-A- 2021 040 367
- JP-A- 2021 075 137
- US-A1- 2020 070 836

## Description

### TECHNICAL FIELD

The present invention relates to torque distribution control.

### BACKGROUND ART

JP2614836B discloses a torque distribution control device for a four-wheel-drive vehicle that variably controls torque distribution of each wheel in accordance with a plurality of control parameters indicating different driving states. In this device, a priority is set for each of the plurality of control parameters, and when an engine output necessary for achieving a target distribution set according to these parameters is not obtained, torque distribution control is performed by sequentially deleting the torque distributions based on the control parameters with lower priorities. Further prior art is known from JP2013192446A.

### SUMMARY OF INVENTION

In an electric vehicle, a torque distribution value of a driving wheel in accordance with a driving state represented by an acceleration in a longitudinal direction or the like may be corrected. The correction can be performed by calculating a correction value for the torque distribution value based on a deviation between an actual value and a target value of a parameter representing a correction factor, and correcting the torque distribution value with the calculated correction value. The correction factor is, for example, a slip, and the parameter representing the correction factor in this case is, for example, a differential rotation between a slipping driving wheel and the other driving wheel.

However, for example, the differential rotation occurs due to a case where tires having different diameters are mounted as front and rear wheels. That is, the parameter representing the correction factor may be changed due to a main cause different from the correction factor. In this case, the calculated correction value may become an inappropriate value, and as a result, the torque distribution value may become inappropriate. When the torque distribution value becomes inappropriate, the torque distribution according to the driving state collapses, and a vehicle turning characteristic and the like may be affected.

The present invention has been made in view of such a problem, and an object thereof is to prevent the torque distribution value from being inappropriate.

### MEANS FOR SOLVING THE PROBLEM

A torque distribution control method according to an aspect of the present invention includes calculating a correction value for a torque distribution value of a driving wheel based on a deviation between an actual value and a target value in an electric vehicle, and correcting the torque distribution value with the calculated correction value. This method further includes limiting the correction value based on the torque distribution value.

According to the other aspect of the present invention, there is provided a torque distribution control device corresponding to the torque distribution control method.

### BRIEF DESCRIPTION OF DRAWINGS

[FIG. 1] FIG. 1 is a block diagram illustrating a configuration of a vehicle.
[FIG. 2] FIG. 2 is a functional block diagram of a motor controller.
[FIG. 3] FIG. 3 is a flowchart showing slip correction torque calculation processing.
[FIG. 4] FIG. 4 is a diagram showing a setting example of an I term limiter distribution value.
[FIG. 5] FIG. 5 is a flowchart showing limiter setting processing.
[FIG. 6] FIG. 6 is a graph showing a first example of a timing chart.
[FIG. 7] FIG. 7 is a graph showing a timing chart of a comparative example.
[FIG. 8] FIG. 8 is a graph showing a second example of the timing chart.

### DESCRIPTION OF EMBODIMENTS

Hereinafter, an embodiment of the present invention will be described with reference to the accompanying drawings.

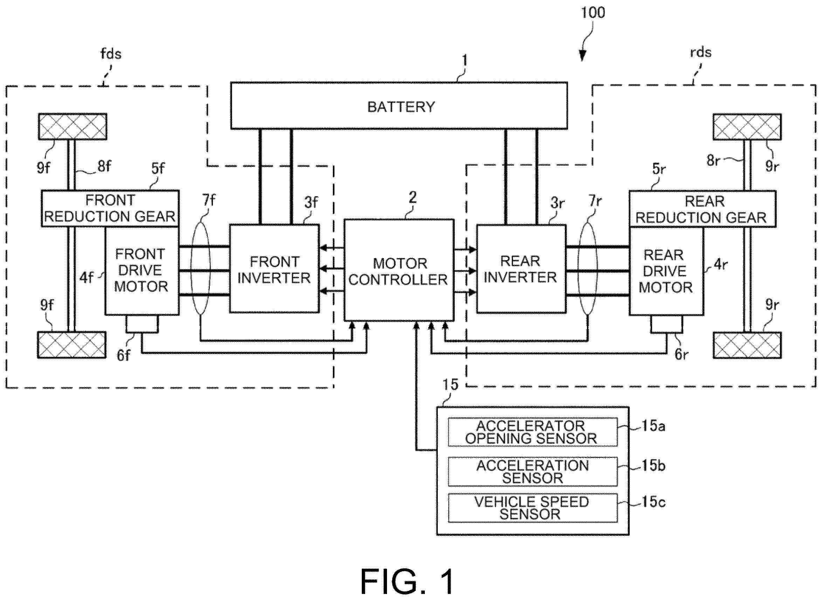

FIG. 1 is a block diagram illustrating a configuration of a vehicle 100 according to the present embodiment. The vehicle 100 is an electric vehicle. An electric vehicle refers to a vehicle including an electric motor (hereinafter, simply referred to as a motor) as a drive source and traveling by generating a driving force due to a torque generated by a motor on one or more wheels. For this reason, the electric vehicle includes not only an electric automobile but also a hybrid vehicle using both a motor and an engine as the drive source. For example, the electric vehicle includes a hybrid vehicle in which a motor is used as a drive source of one of front wheels and rear wheels and an engine is used as a drive source of the other. A four-wheel-drive vehicle refers to a vehicle that uses four wheels as driving wheels. The four-wheel-drive vehicle includes, in addition to a vehicle that normally uses four wheels as driving wheels, a vehicle that can be switched between a so-called two-wheel-drive, which is front-wheel-drive or rear-wheel-drive, and four-wheel-drive. In addition, in the four-wheel-drive vehicle, some of the four wheels can be controlled as driving wheels in conjunction with each other, and the four wheels may be controlled as driving wheels that drive independently. Accordingly, the electric four-wheel-drive vehicle in the present embodiment refers to a vehicle that travels by generating a driving force due to a torque generated by a motor on some or all of the four wheels.

As shown in FIG. 1, the vehicle 100 is an electric four-wheel-drive vehicle. The vehicle 100 includes a front drive system fds, a rear drive system rds, a battery 1, and a motor controller 2 (a controller).

The front drive system fds receives power supplied from the battery 1 and drives front wheels 9f under the control of the motor controller 2. The front drive system fds includes a front inverter 3f, a front drive motor 4f, a front reduction gear 5f, a front rotation sensor 6f, a front drive shaft 8f, the front wheels 9f, and the like. The subscript f indicates a configuration on the front side. The front wheels 9f are a pair of wheels positioned relatively in a front direction of the vehicle 100 among the four wheels of the vehicle 100. The front direction of the vehicle 100 is a predetermined direction formally determined in accordance with a direction of a seat of a driver or the like. In the front drive system fds, the front wheels 9f function as the driving wheels 9 that generate a driving force of the vehicle 100.

The rear drive system rds receives power supplied from the battery 1 and drives rear wheels 9r under the control of the motor controller 2. The rear drive system rds includes a rear inverter 3r, a rear drive motor 4r, a rear reduction gear 5r, a rear rotation sensor 6r, a rear drive shaft 8r, and the rear wheels 9r, symmetrically arranged with respect to the front drive system fds. The subscript r indicates a configuration on the rear side. The rear wheels 9r are a pair of wheels positioned relatively in a rear direction of the vehicle 100 among the four wheels of the vehicle 100. The rear direction of the vehicle 100 refers to a direction opposite to the front direction of the vehicle 100. In the rear drive system rds, the rear wheels 9r function as the driving wheels 9 that generate a driving force of the vehicle 100.

The battery 1 is connected to the motor 4 via the inverter 3, and supplies drive power to the motor 4 by discharging. The battery 1 also can be charged by receiving regenerative power from the motor 4. In the front drive system fds, the battery 1 is connected to the front drive motor 4f via the front inverter 3f. Similarly, in the rear drive system rds, the battery 1 is connected to the rear drive motor 4r via the rear inverter 3r.

The motor controller 2 is a control device of the vehicle 100, and is a computer including a central processing unit (CPU), a read-only memory (ROM), a random access memory (RAM), an input/output interface (I/O interface), and the like. The motor controller 2 generates control signals for controlling the front drive motor 4f and the rear drive motor 4r based on vehicle variables of the vehicle 100. The vehicle variable is information indicating an operation state or a control state of the entire vehicle 100 or each unit constituting the vehicle 100, and can be obtained by detection, measurement, calculation, or the like. The vehicle variables include, for example, an accelerator pedal opening APO, a longitudinal G and a lateral G, a vehicle speed V, a gradient value, a steering angle, a wheel speed, rotation speeds Nmf and Nmr of the motors 4f and 4r, three-phase alternating currents, which will be described later, and the like. The motor controller 2 controls the front drive motor 4f and the rear drive motor 4r using these vehicle variables.

The front inverter 3f and the rear inverter 3r convert a direct current supplied from the battery 1 into an alternating current by turning on and off switching elements according to a drive signal generated by the motor controller 2, and adjust currents supplied to the front drive motor 4f and the rear drive motor 4r, respectively. Each of the inverters 3f and 3r inversely converts alternating currents generated by the front drive motor 4f and the rear drive motor 4r into direct currents by a regenerative braking force, respectively, and adjusts the current supplied to the battery 1.

The front drive motor 4f and the rear drive motor 4r are, for example, three-phase AC motors, and generate a driving force (torque T) by the alternating current supplied from the inverter 3 connected thereto. The driving force generated by the front drive motor 4f is transmitted to the front wheels 9f via the front reduction gear 5f and the front drive shaft 8f. Similarly, the driving force generated by the rear drive motor 4r is transmitted to the rear wheels 9r via the rear reduction gear 5r and the rear drive shaft 8r. The front drive motor 4f and the rear drive motor 4r generate a regenerative braking force when being rotated along with the front wheels 9f and the rear wheels 9r, respectively, and recover kinetic energy of the vehicle 100 as electric energy. The front drive motor 4f constitutes a drive source (front drive source) that drives the front wheels 9f. Similarly, the rear drive motor 4r constitutes a drive source (rear drive source) that drives the rear wheels 9r independently of the front wheels 9f.

Each of the front reduction gear 5f and the rear reduction gear 5r includes, for example, a plurality of gears. Each of the reduction gears 5f and 5r reduces the rotation speed Nm of the motor 4 connected thereto and transmits the reduced rotation speed Nm to the drive shaft 8, thereby generating a driving torque or a braking torque proportional to a reduction ratio. Each of the front rotation sensor 6f and the rear rotation sensor 6r detects a rotor phase of the motor 4 connected thereto, and outputs the detected rotor phase to the motor controller 2. The motor controller 2 detects the rotation speed Nmf of the front drive motor 4f based on the output of the front rotation sensor 6f, and detects the rotation speed Nmr of the rear drive motor 4r based on the output of the rear rotation sensor 6r. Each of a front current sensor 7f and a rear current sensor 7r detects a current flowing through the motor 4 connected thereto, and outputs the detected current to the motor controller 2. In the present embodiment, the current sensors 7f and 7r detect three-phase alternating currents of the motors 4f and 4r, respectively.

The vehicle 100 includes various sensors 15 in addition to the front rotation sensor 6f, the front current sensor 7f, the rear rotation sensor 6r, and the rear current sensor 7r described above. The various sensors 15 include, for example, an accelerator opening sensor 15a, an acceleration sensor 15b, a vehicle speed sensor 15c, a gradient sensor, a steering angle sensor, a wheel speed sensor, and the like. The accelerator opening sensor 15a detects the accelerator pedal opening APO which is an accelerator operation amount. The acceleration sensor 15b detects accelerations in a longitudinal direction and a lateral direction of the vehicle 100, that is, the longitudinal G and the lateral G. The vehicle speed sensor 15c detects the vehicle speed V of the vehicle 100. The vehicle speed V is a moving speed of the entire vehicle body of the vehicle 100, that is, a vehicle body speed. The gradient sensor detects a gradient value which is a traveling road gradient of the vehicle 100. The steering angle sensor detects a steering angle of a steering wheel. The wheel speed sensor detects a wheel speed of each driving wheel 9. Detection values detected by the various sensors 15 are input to the motor controller 2.

In the vehicle 100, a target driving torque T_req, which is a requested torque by the driver, is distributed to the front wheels 9f and the rear wheels 9r. Accordingly, when one of a front torque distribution value RTf which is a torque distribution value RT of the front wheels 9f and a rear torque distribution value RTr which is a torque distribution value RT of the rear wheels 9r is determined, the other is also determined, and as a result, the torque distribution of the front and rear wheels 9f and 9r is also determined. Therefore, the vehicle 100 calculates a rear torque Tr, which is the torque T of the rear drive motor 4r, based on the driving state represented by the first parameter such as the longitudinal G as described later. Thus, the rear torque distribution value RTr can be calculated, and the torque distribution control of the front and rear wheels 9f and 9r is performed by substantially calculating the rear torque distribution value RTr.

The vehicle 100 may slip. The slip as a correction factor can be determined based on a differential rotation Nd by using the differential rotation Nd between the front wheels 9f and the rear wheels 9r as a parameter representing the correction factor. The slip can be suppressed by reducing the torque T of the slipping driving wheel through the correction of the rear torque distribution value RTr. The rear torque distribution value RTr can be corrected by a correction value of the rear torque distribution value RTr (a slip correction torque distribution value RTrslp described later), and the correction value can be calculated based on a deviation DV between an actual differential rotation Nd_a that is an actual value of the differential rotation Nd and a target differential rotation Nd_t that is a target value of the differential rotation Nd.

However, when tires having different diameters are mounted as the front and rear wheels 9f and 9r, the differential rotation Nd may occur due to the above reason. That is, even if no slip occurs, the differential rotation Nd occurs and is changed due to a main cause different from the correction factor of the mounting of tires with different diameters. In this case, as a result of the calculated correction value becoming an inappropriate value, the torque distribution value RT may become inappropriate. When the torque distribution value RT becomes inappropriate, the torque distribution according to the driving state collapses, and thus, for example, a vehicle turning characteristic may be affected.

In view of such circumstances, in the present embodiment, the motor controller 2 is configured as described below.

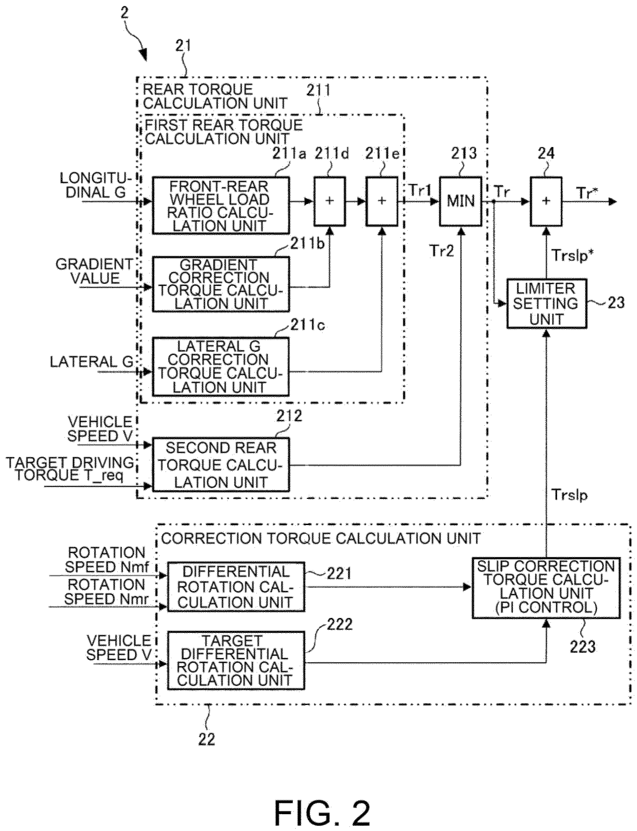

FIG. 2 is a functional block diagram of a motor controller 2. In FIG. 2, the functional block diagram is related to the torque distribution control. The motor controller 2 performs torque distribution control by calculating the rear torque Tr. The motor controller 2 is configured as a controller of a torque distribution control device by being programmed to include each functional block shown in FIG. 2.

The motor controller 2 includes a rear torque calculation unit 21, a correction torque calculation unit 22, a limiter setting unit 23, and an adder 24. The rear torque calculation unit 21 calculates the rear torque Tr. The rear torque Tr is calculated as a target torque of the rear drive motor 4r. The rear torque calculation unit 21 calculates the rear torque Tr according to the driving state of the vehicle 100 by calculating the rear torque Tr based on the first parameter. The first parameter is a parameter indicating the driving state of the vehicle 100, and includes the longitudinal G, the gradient value, the lateral G, the vehicle speed V as a vehicle body speed, and the target driving torque T_req of the vehicle 100.

The target driving torque T_req is set in advance according to the vehicle speed V and the accelerator pedal opening APO, and is distributed to the front torque Tf, which is the torque T of the front drive motor 4f, and the rear torque Tr. Therefore, if the rear torque Tr is calculated, the front torque Tf is determined from the target driving torque T_req and the rear torque Tr, and the torque distribution is naturally determined. That is, the calculation of the rear torque Tr indicates the calculation of the torque distribution to the front and rear wheels 9f and 9r. Accordingly, the calculation of the rear torque Tr indicates the calculation of the rear torque distribution value RTr, and indicates the calculation of the front torque distribution value RTf.

The rear torque calculation unit 21 includes a first rear torque calculation unit 211, a second rear torque calculation unit 212, and a rear torque selection unit 213. Here, the above-described first parameter includes a first driving state parameter and a second driving state parameter. The first driving state parameter is a parameter indicating the first driving state, and the first driving state is a driving state related to driving performance prioritizing torque distribution that prioritizes the driving performance. The longitudinal G, the gradient value, and the lateral G are input to the first rear torque calculation unit 211 as the first driving state parameter. This is because these parameters affect the driving performance. The second driving state parameter will be described later.

The first rear torque calculation unit 211 calculates a first rear torque Tr1 based on the first driving state parameter. In this way, the driving performance prioritizing torque distribution corresponding to the first driving state can be calculated. That is, the first rear torque calculation unit 211 substantially calculates the driving performance prioritizing torque distribution by calculating the first rear torque Tr1. Specifically, the first rear torque calculation unit 211 performs calculation as follows.

The first rear torque calculation unit 211 includes a front-rear wheel load ratio calculation unit 211a, a gradient correction torque calculation unit 211b, a lateral G correction torque calculation unit 211c, an adder 211d, and an adder 211e. The front-rear wheel load ratio calculation unit 211a calculates a basic dynamic front-rear wheel load ratio based on the longitudinal G. The front-rear wheel load ratio calculation unit 211a further calculates a basic torque of the first rear torque Tr1 corresponding to the basic dynamic front-rear wheel load ratio. By calculating the basic dynamic front-rear wheel load ratio, the basic torque distribution to the front and rear wheels 9f and 9r according to the basic dynamic front-rear wheel load ratio can be calculated, and thus the basic torque can also be calculated. The basic torque is calculated so that the torque distribution to the front and rear wheels 9f and 9r is optimized according to the longitudinal G from the viewpoint of acceleration performance and the like.

The gradient correction torque calculation unit 211b calculates a gradient correction torque based on the gradient value. The gradient correction torque is a torque correction value of the basic torque corresponding to the traveling road gradient, and the calculated gradient correction torque is input to the adder 211d. The basic torque is also input to the adder 211d from the front-rear wheel load ratio calculation unit 211a, and the adder 211d adds the gradient correction torque to the basic torque to correct the basic torque according to the traveling road gradient. As a result, the torque distribution to the front and rear wheels 9f and 9r is further corrected so as to be optimal according to the traveling road gradient from the viewpoint of a vehicle propulsive force and the like.

The lateral G correction torque calculation unit 211c calculates a lateral G correction torque based on the lateral G. The lateral G correction torque is a torque correction value of the basic torque corresponding to the lateral G, and the calculated lateral G correction torque is input to the adder 211e. The basic torque corrected by the gradient correction torque is also input from the adder 211d to the adder 211e, and the basic torque is further corrected according to the lateral G by adding the lateral G correction torque to the basic torque by the adder 211e. As a result, the torque distribution to the front and rear wheels 9f and 9r is further corrected so as to be optimal according to the lateral G from the viewpoint of a head-turning property and stability during turning. In the first rear torque calculation unit 211, the basic torque thus corrected by the gradient correction torque and the lateral G correction torque is set as the first rear torque Tr1.

The second rear torque calculation unit 212 calculates a second rear torque Tr2 based on the second driving state parameter. The second driving state parameter is a parameter indicating the second driving state, and the second driving state is a driving state related to fuel efficiency prioritizing torque distribution. Here, there is less concern that behavior of the vehicle 100 is disturbed by slipping during low torque traveling such as low speed traveling or slow acceleration, and a low torque region in which low torque traveling is performed is set in advance according to the vehicle speed V and the target driving torque T_req. Therefore, the vehicle speed V and the target driving torque T_req are input to the second rear torque calculation unit 212 as the second driving state parameter in order to prioritize the fuel efficiency over the case of the driving performance prioritizing torque distribution by the fuel efficiency prioritizing torque distribution during the low torque traveling.

When an operating point corresponding to the vehicle speed V and the target driving torque T_req is in the low torque region, the second rear torque calculation unit 212 calculates the rear torque Tr corresponding to the fuel efficiency prioritizing torque distribution as the second rear torque Tr2. The fuel efficiency prioritizing torque distribution is, for example, torque distribution in which the front torque distribution value RTf is 100% and the rear torque distribution value RTr is 0%. By calculating the second rear torque Tr2 based on the second driving state parameter, the fuel efficiency prioritizing torque distribution is substantially calculated. The second rear torque calculation unit 212 calculates the second rear torque Tr2 not only when the operating point is in the low torque region but also when it is desired to perform torque distribution toward the front side in consideration of energy efficiency, for example. When the fuel efficiency prioritizing torque distribution is not calculated such as when the operating point is not in the low torque region, the second rear torque Tr2 is calculated as an invalid value. The invalid value is a value not selected by the rear torque selection unit 213. The calculated second rear torque Tr2 is input to the rear torque selection unit 213. The first rear torque Tr1 is also input from the first rear torque calculation unit 211 to the rear torque selection unit 213.

The rear torque selection unit 213 selects the smaller one of the input first rear torque Tr1 and second rear torque Tr2 as the rear torque Tr. The rear torque selection unit 213 selects the second rear torque Tr2 when the fuel efficiency prioritizing torque distribution is calculated, for example, when the operating point is in the low torque region, and selects the first rear torque Tr1 when the fuel efficiency prioritizing torque distribution is not calculated. That is, the rear torque selection unit 213 is configured to select the smallest value in accordance with whether the fuel efficiency prioritizing torque distribution is calculated. When the selection is switched from one of the first rear torque Tr1 and the second rear torque Tr2 to the other, the rear torque selection unit 213 can calculate the rear torque Tr so as to change from one to the other. The selected first rear torque Tr1 or second rear torque Tr2 is used as the rear torque Tr, and then the rear torque Tr is calculated by the rear torque calculation unit 21.

The correction torque calculation unit 22 calculates the slip correction torque Trslp. The slip correction torque Trslp is a correction torque of the rear torque Tr and is used for slip correction of the rear torque Tr. The calculation of the slip correction torque Trslp indicates the calculation of the slip correction torque distribution value RTrslp, which is a slip correction value of the rear torque distribution value RTr. Specifically, the correction torque calculation unit 22 performs calculation as follows.

The correction torque calculation unit 22 includes a differential rotation calculation unit 221, a target differential rotation calculation unit 222, and a slip correction torque calculation unit 223. The rotation speed Nmf and the rotation speed Nmr are input to the differential rotation calculation unit 221, and the vehicle speed V is input to the target differential rotation calculation unit 222. The differential rotation calculation unit 221 calculates the actual differential rotation Nd_a of the front and rear wheels 9f and 9r based on the rotation speed Nmf and the rotation speed Nmr, and the target differential rotation calculation unit 222 calculates the target differential rotation Nd_t based on the vehicle speed V. The actual differential rotation Nd_a is calculated by subtracting the rotation speed Nmr from the rotation speed Nmf. The differential rotation Nd corresponds to the second parameter, and is different from the first parameter constituting the parameter referred to in the feedforward control in that the differential rotation Nd is a parameter constituting the actual value and the target value in the feedback control for converging the actual value to the target value based on the deviation. The actual differential rotation Nd_a and the target differential rotation Nd_t are input to the slip correction torque calculation unit 223.

The slip correction torque calculation unit 223 calculates the slip correction torque Trslp based on the deviation DV between the actual differential rotation Nd_a and the target differential rotation Nd_t. The deviation DV is calculated by subtracting the target differential rotation Nd_t from the actual differential rotation Nd_a. The slip correction torque Trslp is calculated by PI control, where P is a proportional gain and I is an integral gain, and is constituted by the sum of P*DV, which is the P term (proportional term), and ∫I*DV, which is the I term (integral term), of the PI control. The processing performed by the slip correction torque calculation unit 223 will be further described later. The calculated slip correction torque Trslp is input to the limiter setting unit 23. The slip correction torque Trslp can be input to the limiter setting unit 23 in a distinguishable state between the P term component and the I term component.

The limiter setting unit 23 limits the slip correction torque Trslp by providing an I term limiter based on an I term limiter torque Trslp_ILMT for the I term component of the PI control. The I term limiter torque Trslp_ILMT is a limiter for the I term component. The limiter is provided for the I term component, but is not provided for the P term component. The rear torque Tr is input to the limiter setting unit 23, and the I term limiter torque Trslp_ILMT is set according to the rear torque distribution value RTr. The setting of the I term limiter torque Trslp_ILMT will be further described later. The limiter setting unit 23 may be configured as a part of the slip correction torque calculation unit 225.

A slip correction torque Trslp*, which is a limited slip correction torque Trslp, is input to the adder 24. The adder 24 also receives the rear torque Tr from the rear torque calculation unit 21, and adds the slip correction torque Trslp* to the rear torque Tr. In this way, the rear torque Tr is slip-corrected. As a result, a rear torque Tr*, which is the rear torque Tr after the slip correction, is finally calculated as the target torque of the rear drive motor 4r.

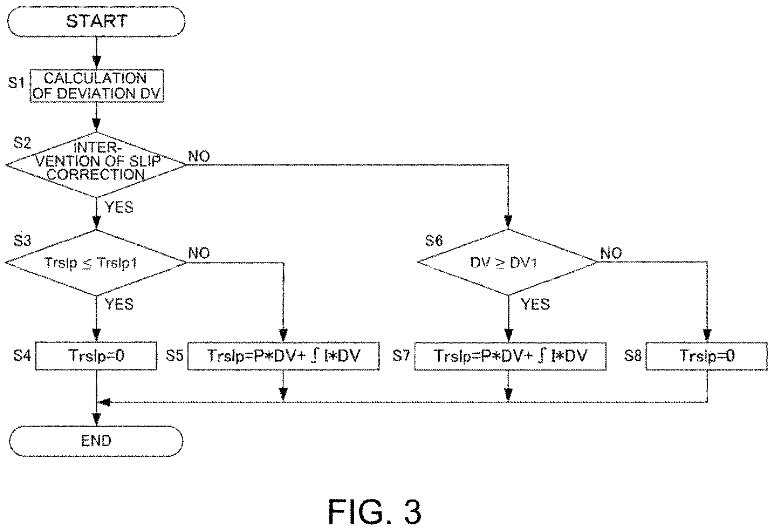

FIG. 3 is a flowchart showing an example of slip correction torque calculation processing performed by the motor controller 2. FIG. 3 shows an example of determining slipping of the front wheels 9f. The processing of this flowchart is performed by the slip correction torque calculation unit 223, and can be repeatedly executed, for example, every calculation cycle. In step S1, the deviation DV is calculated. In step S2, it is determined whether intervention of the slip correction is in progress. In the first routine, slip correction is not performed. Therefore, in the first routine, a negative determination is made in step S2, and the processing proceeds to step S6. In step S6, it is determined whether the deviation DV is equal to or greater than a threshold value DV1. The threshold value DV1 is a determination value as to whether the front wheels 9f slip, and is set in advance. When determining slipping of the rear wheels 9r, in step S6, the threshold value DV1 is assumed as being positive, and it is possible to determine whether the deviation DV is equal to or less than the negative threshold value DV1 (DV ≤ -DV1). When an affirmative determination is made in step S6, it is determined that slip occurs, and the processing proceeds to step S7. In step S7, the slip correction torque Trslp is calculated by the PI control. If a negative determination is made in step S6, it is determined that no slip occurs, and the slip correction torque Trslp is set to zero in step S8. After step S7 and step S8, the processing temporarily ends.

When an affirmative determination is made in step S6, the rear torque Tr is corrected by the slip correction torque Trslp, and the intervention of the slip correction is in progress. Therefore, in the next routine, an affirmative determination is made in step S2, and the processing proceeds to step S3. In step S3, it is determined whether the slip correction torque Trslp is equal to or less than a threshold value Trslp1. When suppressing the slip of the rear wheels 9r, in step S3, the threshold value Trslp 1 is assumed as being positive, and it can be determined whether the slip correction torque Trslp is equal to or greater than the negative threshold value Trslp 1 (Trslp ≥ - Trslp1). The threshold value Trslp1 is a determination value for determining whether the slip is converged, and is set in advance. When a negative determination is made in step S3, it is determined that the slip is not converged, and the slip correction torque Trslp continues to be calculated by the PI control in step S5. When an affirmative determination is made in step S3, it is determined that the slip is converged, and the slip correction torque Trslp is set to zero in step S4. As a result, the intervention of the slip correction is eliminated. After step S4 and step S5, the processing temporarily ends.

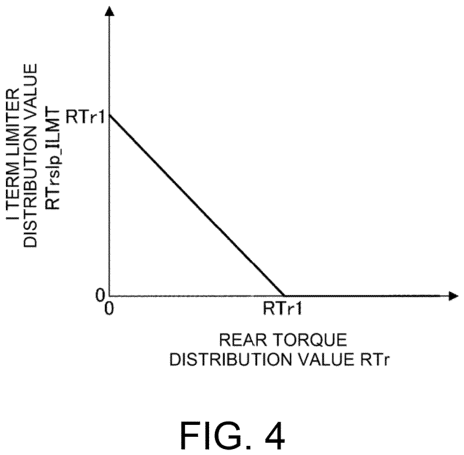

FIG. 4 is a diagram showing a setting example of an I term limiter distribution value RTrslp_ILMT. The I term limiter distribution value RTrslp_ILMT is obtained by converting the I term limiter torque Trslp_ILMT from torque indication to torque distribution value indication, and indicates the I term limiter torque Trslp_ILMT. The first rear torque distribution value RTr1 indicates the rear torque distribution value RTr when the rear torque Tr is the first rear torque Tr1.

Here, the I term limiter distribution value RTrslp_ILMT is calculated by subtracting the rear torque distribution value RTr from the first rear torque distribution value RTr1 (RTrslp_ILMT = RTr1 - RTr). In other words, the I term limiter distribution value RTrslp_ILMT is calculated such that a value obtained by adding the I term limiter distribution value RTrslp_ILMT to the rear torque distribution value RTr becomes the first rear torque distribution value Tr1 (RTr + RTslp_ILMT = RTrl). According to this calculation, even when the rear torque Tr is corrected by the I term component of the PI control, the I term component of the slip correction torque Trslp is limited so that the maximum rear torque Tr* is only the first rear torque Tr1.

As a result, the I term limiter distribution value RTrslp_ILMT is set to decrease as the rear torque distribution value RTr increases. The I term limiter distribution value RTrslp_ILMT is set to the first rear torque distribution value RTr1 when the rear torque distribution value RTr is zero, and to zero when the rear torque distribution value RTr is the first rear torque distribution value RTr1. The I term limiter distribution value RTrslp_ILMT is further set to zero when the rear torque distribution value RTr is larger than the first rear torque distribution value RTr1.

The I term limiter distribution value RTrslp_ILMT can be set in advance according to the rear torque distribution value RTr in this manner. Accordingly, when the rear torque Tr is input to the limiter setting unit 23, the rear torque distribution value RTr corresponding to the input rear torque Tr is known, and the corresponding I term limiter distribution value RTrslp_ILMT is known, and thus the I term limiter torque Trslp_ILMT can be calculated. The I term limiter torque Trslp_ILMT and the I term limiter distribution value RTrslp_ILMT are thus calculated according to the rear torque distribution value RTr. The I term limiter includes the I term limiter torque Trslp_ILMT according to torque indication and the I term limiter distribution value RTrslp_ILMT according to distribution value indication, and is calculated according to the rear torque distribution value RTr. The I term limiter Trslp is calculated as a torque value corresponding to the I term limiter distribution value RTrslp_ILMT obtained by subtracting the rear torque distribution value RTr from the first rear torque distribution value RTr1.

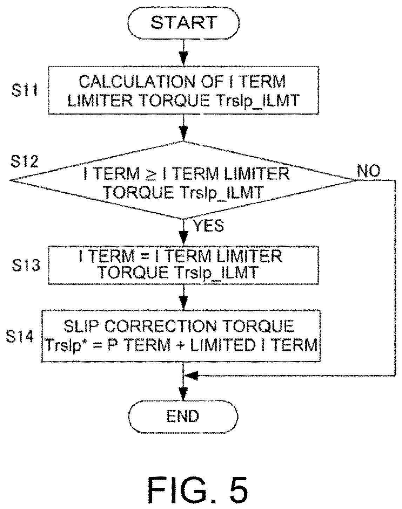

FIG. 5 is a flowchart showing an example of limiter setting processing performed by the motor controller 2. The processing in the flowchart shown in FIG. 5 is performed by the limiter setting unit 23, and can be repeatedly executed similarly to the slip correction torque calculation processing. In step S11, the I term limiter torque Trslp_ILMT is calculated as described with reference to FIG. 4. In step S12, it is determined whether the I term (I term component) of the slip correction torque Trslp is equal to or greater than the I term limiter torque Trslp_ILMT. If a negative determination is made in step S12, the processing temporarily ends since the I term is not limited by the I term limiter torque Trslp_ILMT. If an affirmative determination is made in step S12, the I term is equal to or greater than the I term limiter torque Trslp_ILMT, and then the I term is set to the I term limiter torque Trslp_ILMT in step S13. That is, the I term is further limited by the I term limiter torque Trslp_ILMT. As a result, in step S14, the limited slip correction torque Trslp* is the sum of the P term and the I term limited by the I term limiter torque Trslp_I.

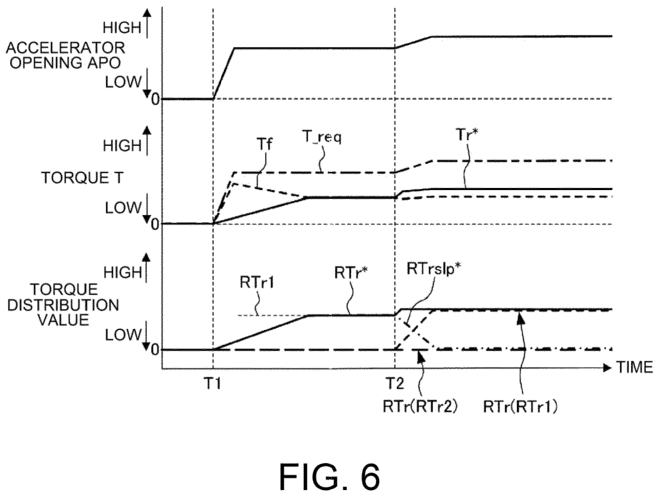

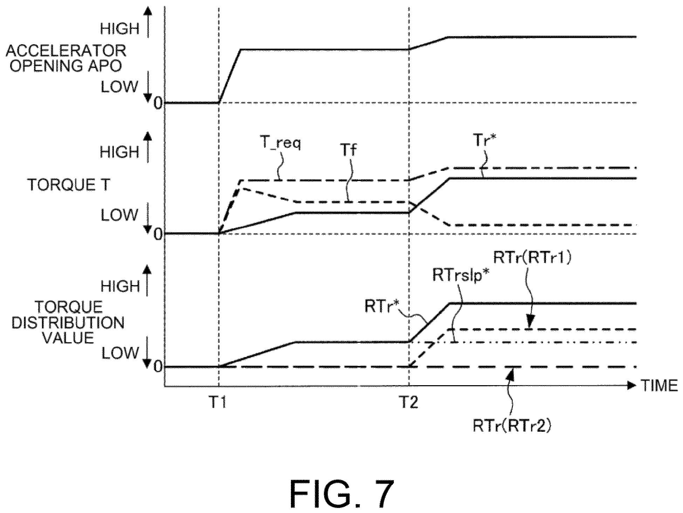

FIG. 6 is a diagram showing a first example of a timing chart corresponding to the torque distribution control according to the present embodiment. FIG. 7 is a timing chart of a comparative example. FIGS. 6 and 7 show a case where tires having different diameters are mounted. In the comparative example, the slip correction torque Trslp is limited to a constant value. The slip correction distribution value RTrslp* is obtained by converting the slip correction torque Trslp* from the torque indication to the torque distribution value indication.

Before a timing T1, the accelerator operation is not performed. Therefore, the accelerator pedal opening APO, target driving torque T_req, and rear torque distribution value RTr are all zero. At the timing T1, the accelerator pedal opening APO starts to increase in accordance with the accelerator operation. As a result, the target driving torque T_req also starts to increase accordingly. In this example, torque is distributed toward the front side in consideration of energy efficiency. Therefore, the second rear torque distribution value RTr2 is selected as the rear torque distribution value RTr, and the rear torque distribution value RTr becomes zero.

From the timing T1, the slip correction distribution value RTrslp* is calculated according to the differential rotation Nd caused by the tires with different diameters. As a result, the rear torque distribution value RTr* increases as the rear torque distribution value RTr* becomes the slip correction distribution value RTrslp by the slip correction, and the rear torque Tr* also increases accordingly. The front torque Tf is set to a value obtained by subtracting the rear torque Tr* from the target driving torque T_req.

In the case of the comparative example shown in FIG. 7, the slip correction distribution value RTrslp* that increases in accordance with the increase in the accelerator pedal opening APO from the timing T1 is limited to a constant value. As a result, the rear torque distribution value RTr*, the rear torque Tr*, and the front torque Tf become constant accordingly. In the present embodiment, the maximum rear torque distribution value RTr* is only the first rear torque distribution value RTr1. Therefore, the rear torque distribution value RTr* becomes constant at the first rear torque distribution value RTr1 corresponding to the target driving torque T_req at this time, and the rear torque Tr* and the front torque Tf also become constant accordingly.

At a timing T2, the accelerator operation amount further increases. As a result, the accelerator pedal opening APO and the target driving torque T_req further increase, and the fuel efficiency prioritizing torque distribution is switched to the driving performance prioritizing torque distribution, and therefore, the rear torque distribution value RTr becomes the first rear torque distribution value RTr1. The rear torque distribution value RTr increases from the second rear torque distribution value RTr2 as the target driving torque T_req increases, and becomes the first rear torque distribution value RTr1. The first rear torque distribution value RTr1 becomes larger than that before the timing T2 according to the target driving torque T_req at this time. As a result, the rear torque distribution value RTr* starts to increase from the timing T2 accordingly.

In the case of the comparative example, the rear torque distribution value RTr* after the slip correction is calculated by adding the slip correction distribution value RTrslp* limited to a constant value to the rear torque distribution value RTr. Therefore, from the timing T2, the rear torque distribution value RTr* unnecessarily increases by the amount of the slip correction distribution value RTrslp*. As a result, the vehicle turning characteristic becomes oversteer.

In the present embodiment, the slip correction distribution value RTrslp* is limited by the limiter distribution value RTrslp_ILIMT expressed by a relational expression of RTrslp_ILIMT = Rtr1 - RTr. Therefore, the slip correction distribution value RTrslp* decreases as the rear torque distribution value RTr increases from the timing T2, and becomes zero when the rear torque distribution value RTr becomes the first rear torque distribution value TRrl. Therefore, the rear torque distribution value RTr* becomes the first rear torque distribution value RTr1 increased according to the accelerator operation from the timing T2, and is not inappropriately corrected by the slip correction distribution value RTrslp*. As a result, the vehicle turning characteristic is prevented from becoming inappropriate.

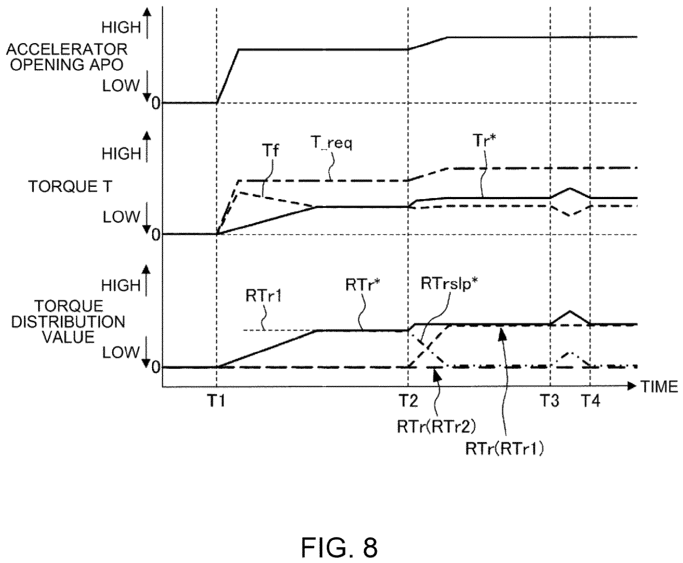

FIG. 8 is a diagram showing a second example of the timing chart corresponding to the torque distribution control according to the present embodiment. The change before a timing T3 is the same as in FIG. 6, and in this example, a slip occurs between the timing T3 and a timing T4. As described above, in the limiter setting unit 23, no limiter is provided for the P term component of the PI control. Therefore, when the slip starts at the timing T3, the slip correction distribution value RTrslp* increases as the P term component increases. As a result, the rear torque distribution value RTr* and the rear torque RTr* also increase. The slip correction distribution value RTrslp* decreases as the P term component decreases when the slip starts to decrease, and becomes zero when the slip converges at the timing T4. As a result, the rear torque distribution value RTr* and the rear torque RTr* return to the state immediately before the slip. Accordingly, in the present embodiment, by not providing a limiter for the P term, it is possible to cope with a slip when the slip occurs while preventing the rear torque distribution value RTr* from becoming inappropriate due to the tires having different diameters.

Next, main functions and effects of the present embodiment will be described.

The torque distribution control method for the vehicle 100, which is an electric vehicle, according to the present embodiment, performs torque distribution control for the front and rear wheels 9f and 9r. The method includes calculating the rear torque Tr, which is the torque T of the rear wheels 9r as one of the plurality of driving wheels, based on the first parameter, calculating the slip correction torque Trslp of the rear torque Tr based on the deviation DV between the actual value Nd_a and the target value Dd_t of the differential rotation Nd as the second parameter, and correcting the rear torque Tr with the calculated slip correction torque Trslp (indicating that the rear torque distribution value RTr is corrected with the calculated slip correction distribution value RTrslp, and corresponding to correcting the torque distribution value using the calculated correction value). This method limits the slip correction value Trslp based on the rear torque Tr (indicating that the slip correction distribution value RTrslp is limited based on the rear torque distribution value RTr, and corresponding to limiting the correction value based on the torque distribution value).

According to such a method, it is possible to limit the slip correction distribution value RTrslp such that the maximum rear torque distribution value RTr* becomes only the rear torque distribution value RTr. That is, it is possible to limit the slip correction value Trslp such that the maximum rear torque Tr* becomes only the rear torque Tr. Therefore, even if the differential rotation Nd as an example of the parameter representing the correction factor is changed due to a main cause different from the correction factor, it is possible to prevent the slip correction distribution value RTrslp as the correction value from becoming an inappropriate value. Accordingly, it is possible to prevent the rear torque distribution value RTr* as the corrected torque distribution value of the driving wheel from becoming inappropriate, and thus it is possible to prevent the vehicle turning performance and the like from being affected.

The slip correction torque Trslp is calculated by the PI control (indicating that the slip correction distribution value RTrslp is calculated by the PI control, and corresponding to that the correction value is calculated by the PI control), and is limited by providing the I term limiter torque Trslp_ILMT for the I term component of the PI control (indicating that the I term limiter distribution value RTrslp_ILMT is provided, and corresponding to providing the I term limiter), while no limiter is provided for the P term component of the PI control. According to such a method, it is possible to cope with the slip while preventing the rear torque distribution value RTr* from becoming inappropriate due to the tires with different diameters.

The I term limiter based on the I term limiter distribution value RTrslp_ILMT is calculated according to the rear torque distribution value RTr. According to such a method, it is possible to appropriately limit the slip correction distribution value RTrslp such that the maximum rear torque distribution value RTr* becomes only the rear torque distribution value RTr.

The first parameter includes the first driving state parameter and the second driving state parameter. The method according to the present embodiment includes calculating, based on the first driving state parameter, the first rear torque Tr1 at which the torque distribution becomes the driving performance prioritizing torque distribution which prioritizes the driving performance (indicating that the first rear torque distribution value RTr1 is calculated, and corresponding to calculating the driving performance prioritizing torque distribution value). The method includes calculating, based on the second driving state parameter, the second rear torque Tr2 at which the torque distribution becomes torque distribution that gives priority to the fuel efficiency as compared with the driving performance prioritizing torque distribution (indicating that the second torque distribution value RTr2 is calculated, and corresponding to calculating the fuel efficiency prioritizing torque distribution value). The rear torque Tr is calculated as the first rear torque Tr1 or the second rear torque Tr2 (indicating that the rear torque distribution value RTr is calculated as the first rear torque distribution value RTr1 or the second rear torque distribution value RTr2, and corresponding to that the torque distribution value is calculated as the first torque distribution value or the second torque distribution value). The I term limiter based on the I term limiter distribution value RTrslp_ILMT is obtained by subtracting the rear torque distribution value RTr from the first rear torque distribution value RTr1.

According to such a method, the slip correction distribution value RTrslp can be appropriately limited by limiting the I term component of the slip correction torque Trslp such that the maximum rear torque Tr* becomes only the first rear torque Tr1.

The vehicle 100 is an electric four-wheel-drive vehicle. The torque distribution value RT of any one of the plurality of driving wheels is set to the torque distribution value RT of the rear wheels 9r of either one of the front and rear driving wheels of the electric four-wheel-drive vehicle, that is, the rear torque distribution value TRr. The second parameter is set to the differential rotation Nd between the front and rear wheels 9f and 9r, and the correction value of the rear torque distribution value RTr is the slip correction distribution value RTrslp, which is a slip correction value used for slip correction of the rear torque distribution value RTr. According to such a method, it is possible to prevent the slip correction distribution value RTrslp from becoming an inappropriate value in a situation in which the differential rotation Nd is changed due to tires with different diameters. Accordingly, it is possible to prevent the rear torque distribution value RTr* from becoming inappropriate, and thus to prevent the vehicle turning characteristic from becoming oversteer.

Although the embodiment of the present invention has been described above, the above-mentioned embodiment is merely a part of application examples of the present invention, and does not mean that the technical scope of the present invention is limited to the specific configurations of the above-mentioned embodiment.

For example, although the calculation is performed with the rear torque Tr as the calculation target in the above-described embodiment, the calculation may be performed with the front torque Tf as the calculation target. Also in this case, since the calculation of the front torque Tf indicates the calculation of the torque distribution to the front and rear wheels 9f and 9r, it is possible to obtain the same effects as in the case of calculating the rear torque Tr.

Although a case where the front wheels 9f slip has been mainly described in the above-described embodiment, a case where the rear wheels 9r slip may be applied. In this case, it is possible to prevent the corrected front torque Tf from becoming inappropriate such as becoming excessive.

The torque distribution value RT of any one of the plurality of driving wheels 9 may not necessarily be the torque distribution value RT of the front wheel 9f or the rear wheel 9r, and the correction factor may not necessarily be the slip. Also in this case, when the correction value of the torque distribution value RT is calculated based on the deviation between the actual value and the target value and the torque distribution value RT is corrected with the calculated correction value, it is possible to prevent the corrected torque distribution value RT from becoming inappropriate by limiting the correction value based on the torque distribution value RT. For example, it is possible to prevent the correction from being inappropriately due to a failure of a sensor when the correction is performed based on an output of the sensor.

## Claims

1. A torque distribution control method for an electric vehicle (100) that performs torque distribution control for a plurality of driving wheels (9), the torque distribution control method comprising:
calculating a torque distribution value of any one of the plurality of driving wheels (9) based on a first parameter; and
calculating a correction value for the torque distribution value based on a deviation between an actual value and a target value of a second parameter, and correcting the torque distribution value with the calculated correction value, **characterized in that**
the correction value is limited based on the torque distribution value.

2. The torque distribution control method according to claim 1, wherein
the correction value is calculated by PI control and is limited by providing an I term limiter for an integral term component of the PI control, but no limiter is provided for a proportional term component of the PI control.

3. The torque distribution control method according to claim 2, wherein
the I term limiter is calculated according to the torque distribution value.

4. The torque distribution control method according to claim 2 or 3, wherein
the first parameter includes a first driving state parameter and a second driving state parameter,
a first torque distribution value which is a traveling performance prioritizing torque distribution value that prioritizes traveling performance is calculated based on the first driving state parameter, and a second torque distribution value which is a fuel efficiency prioritizing torque distribution value that prioritizes fuel efficiency as compared with the traveling performance prioritizing torque distribution value is calculated based on the second driving state parameter,
the torque distribution value is calculated as the first torque distribution value or the second torque distribution value, and
the limited correction value is obtained by subtracting the second torque distribution value from the first torque distribution value.

5. The torque distribution control method according to any one of claims 1 to 4, wherein
the electric vehicle (100) is an electric four-wheel-drive vehicle,
the torque distribution value is a torque distribution value of one of front and rear driving wheels (9f, 9r) of the electric four-wheel-drive vehicle,
the second parameter is differential rotation between the front and rear wheels (9f, 9r), and
the correction value is a slip correction value used in slip correction of the torque distribution value.

6. A torque distribution control device for an electric vehicle (100) including a controller that performs torque distribution control of a plurality of driving wheels, wherein
the controller (2) is configured to calculate a torque distribution value of any one of the plurality of driving wheels (9) based on a first parameter, calculate a correction value for the torque distribution value based on a deviation between an actual value and a target value of a second parameter, and correct the torque distribution value with the calculated correction value, **characterized in that**
the controller (2) is further configured to limit the correction value based on the torque distribution value.

## Patentansprüche

1. Drehmomentverteilungssteuerverfahren für ein Elektrofahrzeug (100), das eine Drehmomentverteilungssteuerung für eine Vielzahl von Antriebsrädern (9) durchführt, wobei das Drehmomentverteilungssteuerverfahren umfasst:
Berechnen eines Drehmomentverteilungswerts eines beliebigen der Vielzahl von Antriebsrädern (9) basierend auf einem ersten Parameter; und
Berechnen eines Korrekturwertes für den Drehmomentverteilungswert basierend auf einer Abweichung zwischen einem Istwert und einem Sollwert eines zweiten Parameters, und Korrigieren des Drehmomentverteilungswerts mit dem berechneten Korrekturwert, **dadurch gekennzeichnet, dass**
der Korrekturwert basierend auf dem Drehmomentverteilungswert begrenzt wird.

2. Drehmomentverteilungssteuerverfahren nach Anspruch 1, wobei
der Korrekturwert durch PI-Steuerung berechnet wird und durch Bereitstellen eines I-Term-Begrenzers für eine Integraltermkomponente der PI-Steuerung begrenzt wird, aber kein Begrenzer für eine Proportionaltermkomponente der PI-Steuerung bereitgestellt wird.

3. Drehmomentverteilungssteuerverfahren nach Anspruch 2, wobei
der I-Term-Begrenzer gemäß dem Drehmomentverteilungswert berechnet wird.

4. Drehmomentverteilungssteuerverfahren nach Anspruch 2 oder 3, wobei
der erste Parameter einen ersten Fahrzustandsparameter und einen zweiten Fahrzustandsparameter beinhaltet,
ein erster Drehmomentverteilungswert, der ein Fahrleistungs-Priorisierungsdrehmomentverteilungswert ist, der die Fahrleistung priorisiert, basierend auf dem ersten Fahrzustandsparameter berechnet wird, und ein zweiter Drehmomentverteilungswert, der ein Kraftstoffeffizienz-Priorisierungsdrehmomentverteilungswert ist, der die Kraftstoffeffizienz im Vergleich zu dem Fahrleistungs-Priorisierungsdrehmomentverteilungswert priorisiert, basierend auf dem zweiten Fahrzustandsparameter berechnet wird,
der Drehmomentverteilungswert als der erste Drehmomentverteilungswert oder der zweite Drehmomentverteilungswert berechnet wird, und
der begrenzte Korrekturwert durch Subtrahieren des zweiten Drehmomentverteilungswerts von dem ersten Drehmomentverteilungswert erhalten wird.

5. Drehmomentverteilungssteuerverfahren nach einem der Ansprüche 1 bis 4, wobei
das Elektrofahrzeug (100) ein vierradgetriebenes Elektrofahrzeug ist,
der Drehmomentverteilungswert ein Drehmomentverteilungswert eines von vorderen und hinteren Antriebsrädern (9f, 9r) des vierradgetriebenen Elektrofahrzeugs ist,
der zweite Parameter eine Differentialdrehung zwischen den vorderen und hinteren Rädern (9f, 9r) ist, und
der Korrekturwert ein Schlupfkorrekturwert ist, der bei der Schlupfkorrektur des Drehmomentverteilungswerts verwendet wird.

6. Drehmomentverteilungssteuervorrichtung für ein Elektrofahrzeug (100) mit einer Steuerung, die eine Drehmomentverteilungssteuerung einer Vielzahl von Antriebsrädern durchführt, wobei
die Steuerung (2) konfiguriert ist, einen Drehmomentverteilungswert eines beliebigen der Vielzahl von Antriebsrädern (9) basierend auf einem ersten Parameter zu berechnen, einen Korrekturwert für den Drehmomentverteilungswert basierend auf einer Abweichung zwischen einem Istwert und einem Sollwert eines zweiten Parameters zu berechnen, und den Drehmomentverteilungswert mit dem berechneten Korrekturwert zu korrigieren, **dadurch gekennzeichnet, dass**
die Steuerung (2) ferner konfiguriert ist, den Korrekturwert basierend auf dem Drehmomentverteilungswert zu begrenzen.

## Revendications

1. Procédé de commande de distribution de couple pour un véhicule électrique (100) qui effectue une commande de distribution de couple pour une pluralité de roues motrices (9), le procédé de commande de distribution de couple comprenant :
le calcul d'une valeur de distribution de couple de l'une quelconque de la pluralité de roues motrices (9) sur la base d'un premier paramètre ; et
le calcul d'une valeur de correction pour la valeur de distribution de couple sur la base d'un écart entre une valeur réelle et une valeur cible d'un second paramètre, et la correction de la valeur de distribution de couple avec la valeur de correction calculée, **caractérisé en ce que**
la valeur de correction est limitée sur la base de la valeur de distribution de couple.

2. Procédé de commande de distribution de couple selon la revendication 1, dans lequel
la valeur de correction est calculée par une commande PI et est limitée en fournissant un limiteur de terme I pour une composante de terme intégral de la commande PI, mais aucun limiteur n'est fourni pour une composante de terme proportionnel de la commande PI.

3. Procédé de commande de distribution de couple selon la revendication 2, dans lequel
le limiteur de terme I est calculé selon la valeur de distribution de couple.

4. Procédé de commande de distribution de couple selon la revendication 2 ou 3, dans lequel
le premier paramètre comprend un premier paramètre d'état de conduite et un second paramètre d'état de conduite,
une première valeur de distribution de couple qui est une valeur de distribution de couple de priorité de performance de déplacement qui donne la priorité à la performance de déplacement est calculée sur la base du premier paramètre d'état de conduite, et une seconde valeur de distribution de couple qui est une valeur de distribution de couple de priorité d'efficacité de carburant qui donne la priorité à l'efficacité de carburant par rapport à la valeur de distribution de couple de priorité de performance de déplacement est calculée sur la base du second paramètre d'état de conduite,
la valeur de distribution de couple est calculée en tant que première valeur de distribution de couple ou seconde valeur de distribution de couple, et
la valeur de correction limitée est obtenue en soustrayant la seconde valeur de distribution de couple de la première valeur de distribution de couple.

5. Procédé de commande de distribution de couple selon l'une quelconque des revendications 1 à 4, dans lequel
le véhicule électrique (100) est un véhicule électrique à quatre roues motrices,
la valeur de distribution de couple est une valeur de distribution de couple de l'une des roues motrices avant et arrière (9f, 9r) du véhicule électrique à quatre roues motrices,
le second paramètre est une rotation différentielle entre les roues avant et arrière (9f, 9r), et
la valeur de correction est une valeur de correction de glissement utilisée dans la correction de glissement de la valeur de distribution de couple.

6. Dispositif de commande de distribution de couple pour un véhicule électrique (100) comprenant un dispositif de commande qui effectue une commande de distribution de couple d'une pluralité de roues motrices, dans lequel
le dispositif de commande (2) est configuré pour calculer une valeur de distribution de couple de l'une quelconque de la pluralité de roues motrices (9) sur la base d'un premier paramètre, calculer une valeur de correction pour la valeur de distribution de couple sur la base d'un écart entre une valeur réelle et une valeur cible d'un second paramètre, et corriger la valeur de distribution de couple avec la valeur de correction calculée, **caractérisé en ce que**
le dispositif de commande (2) est en outre configuré pour limiter la valeur de correction sur la base de la valeur de distribution de couple.
